(19) Europäisches Patentamt

European Patent Office

Office européen des brevets

(11) EP 0 524 591 B1

(12) FASCICULE DE BREVET EUROPEEN

(45) Date de publication et mention
de la délivrance du brevet:
**15.05.1996 Bulletin 1996/20**

(51) Int. Cl.⁶: **C03B 37/018**, C03B 37/012,
C03C 13/04, H01S 3/06

(21) Numéro de dépôt: **92112419.4**

(22) Date de dépôt: **21.07.1992**

(54) **Procédé de fabrication de fibres optiques actives**

Verfahren zum Herstellen aktiver, optischer Fasern

Process for manufacturing active optical fibres

(84) Etats contractants désignés:
**CH DE FR GB IT LI NL SE**

(30) Priorité: **25.07.1991 FR 9109429**

(43) Date de publication de la demande:
**27.01.1993 Bulletin 1993/04**

(73) Titulaire: **ALCATEL FIBRES OPTIQUES**
**F-95871 Bezons Cedex (FR)**

(72) Inventeur: **Le Sergent, Christian**
**F-91460 Marcoussis (FR)**

(74) Mandataire: **Weinmiller, Jürgen et al**
**Lennéstrasse 9**
**Postfach 24**
**82336 Feldafing (DE)**

(56) Documents cités:
**EP-A- 0 313 209**      **EP-A- 0 437 935**
**FR-A- 2 022 683**      **US-A- 3 516 001**

## Description

La présente invention concerne un procédé de fabrication de fibres optiques actives (laser ou amplificatrices).

Il existe plusieurs procédés de fabrication des fibres optiques. Cependant, on procède toujours à la manière suivante :

- préparation d'une préforme, c'est-à-dire d'un barreau de silice vitreuse de grande pureté avec le profil d'indice de réfraction requis,
- puis tirage de la fibre à partir de la préforme.

Pour la fabrication des fibres optiques pour télécommunications, on emploie le plus souvent des procédés de réactions en phase vapeur qui permettent d'atteindre de hauts degrés de pureté. Le matériau de base est de la silice pure. Des dopants, dits dopants primaires, sont ajoutés afin de modifier l'indice de réfraction de la silice. Le choix des dopants est lié à la différence d'indice souhaitée. On peut par exemple utiliser le bore et le fluor qui diminuent l'indice de réfraction de la silice, ou le phosphore et le germanium, qui l'augmentent.

On connaît aussi, depuis quelque temps, des fibres optiques actives obtenues par dopage à partir d'éléments des terres rares, par exemple l'erbium. Ces dopants sont qualifiés de dopants secondaires. On utilise alors généralement un autre dopant primaire, l'alumine, pour éviter le phénomène d'aggrégat des ions de terres rares. De telles fibres sont décrites dans le document EP-A-0 313 209.

Pour parvenir à une meilleure efficacité des fibres optiques actives, il est apparu nécessaire d'améliorer l'interaction lumière-matériau. Ceci peut être obtenu de deux façons. D'une part, en augmentant la densité d'énergie dans le coeur de la fibre optique par diminution de son rayon, par exemple au niveau du µm. Ceci implique d'avoir une forte différence d'indice (de l'ordre de 30 à 50. $10^{-3}$) et une forte concentration en dopant primaire. On peut d'autre part améliorer l'interaction lumière-matériau en confinant l'espèce active (l'erbium par exemple) dans la zone la plus centrale du coeur.

Il se pose alors un problème de diffusion des dopants primaires et secondaires qui rend difficile l'obtention des deux objectifs ci-dessus.

Ces diffusions interviennent lors de toutes les étapes du procédé de fabrication où il est nécessaire de chauffer à haute température, à savoir lors du rétreint et de l'étirage éventuel de la préforme et lors du tirage de la fibre. La température est habituellement gouvernée par le caractère réfractaire de la gaine externe non dopée. Ce problème dû à la diffusion intervient dès la fabrication de la préforme, par exemple par la technique bien connue de dépôt interne MCVD (dépôt chimique en phase vapeur modifié). Pour des compositions de coeur spectroscopiquement favorables, comportant des teneurs en $Al_2 O_3$ de l'ordre de la dizaine de % et en $Ge O_2$ de l'ordre de quelques dizaines de %, ce problème de diffusion se traduit par l'extrême difficulté à parvenir simultanément à obtenir :

- $\Delta n > 30. 10^{-3}$,
- $2A < 1$ mm (A étant le rayon du coeur sur préforme),
- le rayon dans lequel est confiné le dopant secondaire significativement différent de A.

Il se pose également un problème de contraintes thermomécaniques dû à la grande différence de coefficient de dilatation entre le coeur de la fibre, à forte teneur en dopant primaire, et la gaine externe habituellement non dopée.

Enfin de pallier ces inconvénients, on propose selon la présente invention de réaliser des préformes et des fibres pour lesquelles la gaine externe comporte un dopage permettant :

- de maintenir son indice à un niveau légèrement supérieur à celui de la gaine optique ;
- de réduire sa température de ramollissement à une valeur proche de celle de la gaine optique, permettant ainsi d'élaborer des préformes et des fibres dans des conditions de température moins élevées et de réduire ainsi les phénomènes de diffusion ;
- de réduire les contraintes thermomécaniques moyennes par rapprochement des coefficients de dilatation ou des températures de ramollissement.

Dans le cas des techniques de dépôt interne, c'est le tube de dépôt qui doit comporter ledit dopage. L'invention s'applique en particulier aux techniques de dépôt interne dans un tube connues sous les noms de MCVD, PCVD (dépôt chimique en phase vapeur activé par plasma), SPCVD (dépôt chimique en phase vapeur activé par plasma à ondes de surface), etc. Les techniques de dopage par terres rares peuvent être l'imprégnation, la nébulisation ou la méthode des organométalliques.

L'invention a donc pour objet une préforme destinée au tirage de fibre optique active, comprenant une zone interne destinée à constituer le coeur de la fibre optique et une zone externe destinée à constituer la gaine optique de la fibre, la préforme comprenant un dopage primaire pour conférer une forte différence d'indice de réfraction entre le coeur et la gaine optique de la fibre, un dopage secondaire de la zone interne permettant de concentrer une espèce active au centre du coeur de la fibre, caractérisée en ce que la partie périphérique extérieure de la zone externe est dopée de manière à lui conférer, par rapport à la zone interne, une différence de température de ramollissement inférieure à celle qui existerait si elle n'était pas dopée.

L'invention a aussi pour objet un procédé de fabrication de fibres optiques actives comprenant la préparation d'une préforme comprenant, un dopage primaire pour conférer une forte différence d'indice de rétraction entre le coeur et la gaine optique de la préforme, un dopage secondaire de la zone interne permettant de concentrer une espèce active au centre du coeur de la préforme, puis le tirage de fibre à partir de la préforme, caractérisé en ce qu'il consiste à partir d'une préforme ayant une zone extérieure périphérique dopée, cette zone étant destinée à constituer la gaine externe de la fibre optique, le dopage de la zone périphérique lui conférant un indice de réfraction supérieur à celui de la gaine optique et, par rapport au coeur de la fibre optique, une différence de température de ramollissement inférieure à celle qui existerait si la zone extérieure n'était pas dopée.

La préforme petit être obtenue par un dépôt chimique en phase vapeur effectué à l'intérieur d'un tube, le tube constituant la zone extérieure périphérique dopée.

Cette zone extérieure périphérique dopée peut être constituée de silice dopée par au moins les dopants suivants, en concentration massique :

$$0,2\% < P_2O_5 < 4\%$$

$$0 < F < 0,2\%.$$

Elle peut être également constituée de silice dopée par au moins les dopants suivants, en concentration massique :

$$0 < P_2O_5 < 2\%$$

$$0,1\% < Al_2O_3 < 2\%$$

$$0 < F < 1\%.$$

L'invention sera mieux comprise et d'autres avantages et particularités apparaîtront à la lecture de la description qui va suivre, donnée à titre non limitatif, accompagnée de la figure annexée qui est un diagramme représentant la structure d'une fibre optique active selon l'invention.

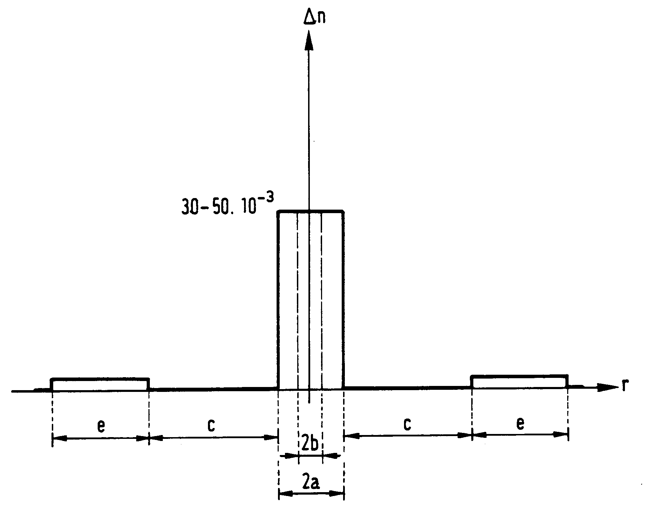

Le diagramme de la figure 1 comporte en axe des ordonnées l'indice de réfraction $\Delta n$ d'une fibre optique à base de silice. L'axe des abscisses correspond à l'axe de la fibre optique et par conséquent à l'axe de la préforme. En abscisses, on a représenté la distance r par rapport à l'axe de la fibre. Le coeur de la fibre de diamètre 2a (correspondant à un diamètre 2A sur la préforme) est par exemple dopé par les dopants primaires $Al_2O_3$ et $GeO_2$. L'espèce active, par exemple de l'erbium, est confinée dans la partie centrale du coeur de diamètre 2b. Autour du coeur de la fibre, sur une couronne de largeur c, on trouve la gaine optique de diamètre 2d sur fibre (correspondant à un diamètre 2D sur la préforme). Autour de la gaine optique, sur une couronne de largeur e, on trouve la gaine externe de la fibre optique. Contrairement à ce qui se fait habituellement, cette partie de la gaine en silice est dopée légèrement.

A titre d'exemple, pour obtenir une préforme ayant une gaine optique d'indice $- 1.10^{-3}$ par rapport à la silice, de gaine externe ayant un indice de $- 0,5. \ 10^{-3}$ par rapport à la silice et une température de ramollissement inférieure d'environ 200°C à celle de la silice, on peut procéder de la manière suivante. On utilise une technique d'élaboration MCVD, par dépôts successifs à l'intérieur d'un tube. On choisit pour le tube de dépôt une composition comportant une teneur en pentoxyde de phosphore de l'ordre de 1,1% en poids et une teneur en fluor de l'ordre de 0,1% en poids comme compensateur d'indice. De tels tubes peuvent être réalisés suivant les techniques bien connues d'usinage et étirage de boules de silice dopées, réalisées par exemple par une technique de dépôt axial en phase vapeur (VAD).

On réalise alors les opérations habituelles de dépôt de gaine optique, de couches externes de coeur, de couches internes dopées avec une terre rare, par exemple en utilisant un précurseur organométallique comme mentionné dans l'article "Fabrication of High - Concentration Rare - Earth Doped Optical Fibers Using Chelates" de R.P. TUMMINELLI et al. paru dans Journal of Lightwave Technology, vol. 8, n° 11, novembre 1990. On procède également aux opérations de rétreint, voire d'étirage et de manchonnage en appliquant les puissances de chauffage minimales indispensables.

On peut ainsi obtenir des fibres ayant un indice $\Delta n$ supérieur à $35.10^{-3}$, avec un confinement du dopant terre rare dans la partie centrale du coeur, ces fibres ayant des caractéristiques d'amplification améliorées de l'ordre de 20% pour une puissance de pompe de 5 mV à 1,478 µm et un signal de - 40 dBm à 1532 nm. Ces fibres présentent des contraintes thermomécaniques restreintes.

## Revendications

1. Préforme destinée au tirage de fibre optique active, comprenant une zone interne destinée à constituer le coeur de la fibre optique et une zone externe destinée à constituer la gaine optique de la fibre, la préforme comprenant un dopage primaire pour conférer une forte différence d'indice de réfraction entre le coeur et la gaine optique de la fibre, un dopage secondaire de la zone interne permettant de concentrer une espèce active au centre du coeur de la fibre,
caractérisée en ce que la partie périphérique extérieure de la zone externe est dopée de manière à lui conférer, par rapport à la zone interne, une différence de température de ramollissement inférieure à celle qui existerait si elle n'était pas dopée.

2. Procédé de fabrication de fibres optiques actives comprenant la préparation d'une préforme comprenant un dopage primaire pour conférer une forte différence d'indice de réfraction entre le coeur et la gaine optique de la préforme, un dopage secondaire de la zone interne permettant de concentrer une espèce active au centre du coeur de la préforme, puis le tirage de fibre à partir de la préforme, caractérisé en ce qu'il consiste à partir d'une préforme ayant une zone extérieure périphérique dopée, cette zone étant destinée à constituer la gaine externe de la fibre optique, le dopage de la zone périphérique lui conférant un indice de réfraction supérieur à celui de la gaine optique et, par rapport au coeur de la fibre optique, une différence de température de ramollissement inférieure à celle qui existerait si la zone extérieure n'était pas dopée.

3.  Procédé selon la revendication 2, caractérisé en ce que la préforme est obtenue par un dépôt chimique en phase vapeur effectué à l'intérieur d'un tube, le tube constituant ladite zone extérieure périphérique dopée.

4.  Procédé selon l'une des revendications 2 ou 3, caractérisé en ce que, la préforme étant à base de silice, ladite zone extérieure périphérique dopée est constituée de silice dopée par au moins les dopants suivants pour des conditions de concentration massique :

$$0,2\% < P_2 O_5 < 4\%$$

$$0 < F < 0,2\%.$$

5.  Procédé selon l'une des revendications 2 ou 3, caractérisé en ce que, la préforme étant à base de silice, ladite zone extérieure périphérique dopée est constituée de silice dopée par au moins les dopants suivants pour des conditions de concentration massique :

$$0 < P_2 O_5 < 2\%$$

$$0,1\% < Al_2 O_3 < 2\%$$

$$0 < F < 1\%.$$

**Claims**

1.  A preform for drawing an active optical fiber, the preform comprising an inner zone intended to constitute the core of the optical fiber and an outer zone intended to constitute the optical cladding of the fiber, the preform including primary doping to confer a large refractive index difference between the core and the optical cladding of the fiber, secondary doping of the inner zone enabling an active species to be concentrated in the center of the core of the fiber, the preform being characterized in that the outer peripheral portion of the outer zone is doped so as to impart thereto a difference in softening temperature relative to the inner zone that is smaller than the difference which would exist if it were not doped.

2.  A method of manufacturing active optical fibers comprising preparing a preform including primary doping to confer a large refractive index difference between the core and the optical cladding of the fiber, secondary doping of the inner zone enabling an active species to be concentrated in the center of the core of the fiber, and then drawing a fiber from the preform, the method being characterized in that it consists in using a preform having a doped peripheral outer zone, said zone being intended to constitute the outer cladding of the optical fiber, the doping of the peripheral zone giving it a refractive index greater than that of the optical cladding, and giving it a difference in softening temperature relative to that of the core of the optical fiber which is less than the difference that would exist if the outer zone were not doped.

3.  A method according to claim 2, characterized in that the preform is obtained by chemical vapor deposition performed inside a tube, the tube constituting said doped peripheral outer zone.

4.  A method according to claim 2 or 3, characterized in that the preform is based on silica, and the doped peripheral outer zone is constituted by silica doped with at least the following dopants at the following concentrations by mass:

$$0 \,.\, 2\% < P_2O_5 < 4\%$$

$$0 < F < 0 \,.\, 2\%.$$

5.  A method according to claim 2 or 3, characterized in that the preform is based on silica, and said doped peripheral outer zone is constituted by silica doped with at least the following dopants at the following concentrations by mass:

$$0 < P_2O_5 < 2\%$$

$$0 \,.\, 1\% < Al_2O_3 < 2\%$$

$$0 < F < 1\%.$$

**Patentansprüche**

1.  Rohling für das Ziehen einer aktiven Lichtleitfaser, der eine innere Zone, die den Kern der späteren Lichtleitfaser bilden soll, und eine äußere Zone aufweist, die die optische Hülle der späteren Faser bilden soll, wobei der Rohling eine primäre Dotierung aufweist, um zwischen dem Kern und der optischen Hülle der Faser einen starken Brechungsindex-Unterschied hervorzurufen, wobei eine sekundäre Dotierung der inneren Zone es ermöglicht, einen aktiven Stoff im Zentrum des Kerns der Faser zu konzentrieren, dadurch gekennzeichnet, daß der periphere äußere Bereich der äußeren Zone so dotiert ist, daß er in Bezug auf die innere Zone einen Unterschied der Erweichungstemperatur besitzt, der geringer ist als derjenige, der vorliegenden würde, wenn dieser Bereich nicht dotiert wäre.

2. Herstellungsverfahren für aktive Lichtleitfasern, zu dem die Herstellung eines Rohlings gehört, der eine primäre Dotierung aufweist, um zwischen dem Kern und der optischen Hülle des Rohlings einen großen Unterschied des Brechungsindex zu erzeugen, wobei eine sekundäre Dotierung der inneren Zone einen aktiven Stoff im Zentrum des Kerns des Rohlings zu konzentrieren vermag, worauf eine Faser ausgehend vom Rohling gezogen wird, dadurch gekennzeichnet, daß man von einem Rohling mit einer dotierten äußeren peripheren Zone ausgeht, die die äußere Hülle der späteren Lichtleitfaser bilden soll, wobei diese Dotierung der peripheren Zone einen Brechungsindex verleiht, der höher ist als der der optischen Hülle, und in Bezug auf den Kern der Lichtleitfaser einen Unterschied der Erweichungstemperatur verleiht, der geringer ist als der, der existieren würde, wenn die äußere Zone nicht dotiert wäre.

3. Verfahren nach Anspruch 2, dadurch gekennzeichnet, daß der Rohling durch eine chemische Beschichtung aus der Dampfphase erhalten wird, die innerhalb eines Rohrs durchgeführt wird, wobei das Rohr die äußere periphere dotierte Zone bildet.

4. Verfahren nach einem der Ansprüche 2 oder 3, dadurch gekennzeichnet, daß, wenn der Rohling auf der Basis von Siliziumoxid hergestellt ist, die äußere periphere dotierte Zone aus Siliziumoxid besteht, das zumindest mit den folgenden Dotierstoffen in folgender Massekonzentration dotiert ist:

$$0{,}2\% < P_2O_5 < 4\%$$

$$0 < F < 0{,}2\%.$$

5. Verfahren nach einem der Ansprüche 2 oder 3, dadurch gekennzeichnet, daß, wenn der Rohling auf der Basis von Siliziumoxid hergestellt ist, die äußere periphere dotierte Zone aus Siliziumoxid besteht, das zumindest mit den folgenden Dotierstoffen in folgender Massekonzentration dotiert ist:

$$0 < P_2O_5 < 2\%$$

$$0{,}1\% < Al_2O_3 < 2\%$$

$$0 < F < 1\%.$$